# EUROPEAN PATENT APPLICATION

(11) **EP 4 564 200 A1**
(43) Date of publication of application: **04.06.2025**
(21) Application number: 23212925.4
(22) Date of filing: 29.11.2023
(51) Int. Cl.: G06F 21/31, H04L 9/40, G06F 21/60, H04L 67/12

(54) **A METHOD FOR MANAGING EMERGENCY ACCESS TO A COMPUTER SYSTEM OF A RENEWABLE POWER PLANT**

(71) Applicant: VESTAS WIND SYSTEMS A/S, 8200 Aarhus N (DK)
(72) Inventor: Souza Carneiro, Rafael Angelo, 4000-475 Porto (PT); Azevedo Areias, Francisco, 4150-640 Porto (PT); Silva Pereira, Jose Francisco, 4620-221 Porto (PT); Teixeira, Luis Miguel, 4815-448 Vizela (PT)
(74) Representative: Vestas Patents Department

(57) **Abstract**

A method for managing emergency access to a computer system (4) of a renewable power plant (3) is disclosed. A user (5) requests credentials of an emergency account related to the computer system (4) of the renewable power plant (3) from a central access system (2), and the central access (2) system provides the requested credentials to the user (5). The user (5) accesses the computer system (4) of the renewable power plant (3), using the emergency account and the credentials provided by the central access system (2), and performs actions at the computer system (4) of the renewable power plant (3). The computer system (4) communicates to the central access system (2) that the emergency account has been used for accessing the computer system (4). The credentials of the emergency account are refreshed, and the refreshed credentials are shared among the computer system (4) of the renewable power plant (3) and the central access system (2).

## Description

### FIELD OF THE INVENTION

The present invention relates to a method for managing emergency access to a computer system of a renewable power plant, such as a wind power plant, a solar power plant or a hybrid power plant. The method according to the invention allows for easy and convenient emergency access to the computer system without compromising the security of the computer system.

### BACKGROUND OF THE INVENTION

Renewable power plants, such as wind power plants, solar power plants or hybrid power plants, normally include computer systems, such as control units, power plant controllers, etc. It may be necessary that personnel gain access to such computer systems, e.g. from locations outside the renewable power plant. Such access will normally be subject to an authentication process.

In the case that normal access to the computer system of a renewable power plant is inaccessible, e.g. because the part of the system which normally handles the authentication process is unavailable or inaccessible, authorised personnel may need to access the computer system via an emergency access, e.g. in order to resolve the issues underlying the inaccessibility of the computer system and/or in order to ensure safe and appropriate operation of the renewable power plant. Such emergency access systems are sometimes referred to as 'break the glass' systems.

Effectively managing and maintaining emergency access systems can be a complex task. It usually requires a systematic, and possibly manual, approach to ensure that only authorised personnel is provided access via the emergency access system, while maintaining a high level of security and accountability. Thus, the emergency accounts may grant emergency access for privileged users in critical situations. However, the traditional manual process of managing and monitoring the emergency accounts may be time-consuming, error-prone and lack efficiency.

Furthermore, there is a risk that the emergency accounts may be used out of their purpose, e.g. in non-emergency cases. When this occurs, the usual traceability of the actions performed by the users can not be ensured, and this may cause desynchronisation with the usual access management system. In some cases, users may even share the credentials for the emergency accounts. This introduces a security risk in the sense that there is a risk that a malicious party may come into the possession of the credentials for one of the emergency accounts, thereby allowing the malicious party to gain unauthorised access to the computer system.

### DESCRIPTION OF THE INVENTION

It is an object of embodiments of the invention to provide a method for managing emergency access to a computer system of a renewable power plant, which ensures easy access for authorised personnel without compromising the security of the computer system.

The invention provides a method for managing emergency access to a computer system of a renewable power plant, the method comprising the steps of:
- a user requesting credentials of an emergency account related to the computer system of the renewable power plant from a central access system,
- the central access system providing the requested credentials to the user,
- the user accessing the computer system of the renewable power plant, using the emergency account and the credentials provided by the central access system, and the user performing actions at the computer system of the renewable power plant,
- the computer system of the renewable power plant communicating to the central access system that the emergency account has been used for accessing the computer system of the renewable power plant,
- refreshing the credentials of the emergency account, and
- sharing the refreshed credentials among the computer system of the renewable power plant and the central access system.

Thus, the method according to the invention is a method for managing emergency access to a computer system of a renewable power plant. In the present context the term 'renewable power plant' should be interpreted to mean a power plant comprising one or more, preferably a plurality of, renewable power producers, such as wind turbines, photovoltaic units, etc. Thus, the renewable power plant could, e.g., be a wind power plant, a solar power plant or a hybrid power plant comprising wind turbines as well as photovoltaic units.

Renewable power plants, e.g. of the kind described above, may be regarded as forming part of critical infrastructure, since they may form part of the energy supply of a public community. It is therefore particularly important that strict access control to various parts of such renewable power plants is applied. Furthermore, it is also important that relevant personnel is allowed prompt an easy access to the renewable power plant, including the digital infrastructure thereof, in the case of emergency situations, since such access may be necessary in order to ensure continued appropriate and safe operation of the renewable power plant, as well as in order to attend to and handle issues causing or underlying the emergency situation.

The computer system of the renewable power plant could, e.g., be a computer system which is responsible for at least part of the operation and/or control of the renewable power plant. For instance, the computer system could be a power plant controller (PPC), a controller of one of the renewable power producers, a SCADA server, a switch, a router, or any other suitable kind of computer system which may be important for proper operation of the renewable power plant.

In the present context the term emergency access' should be interpreted to mean access to the computer system during emergency situations where the usual authorisation service is unavailable or inaccessible. Emergency situations could, e.g., include situations where communication connections between the user and the computer system, between the computer system and the usual authorisation service, between the user and the usual authorisation service, and/or other relevant communication connections are unavailable or interrupted. Alternatively, emergency situations could include situations where errors or malfunction occur at the usual authorisation service.

Thus, usual access of users to the computer system during normal operation of the renewable power plant should not be interpreted as falling within the term 'emergency access'.

During such emergency situations, it may be required that trusted personnel access the computer system, e.g. in order to ensure continued appropriate and safe operation of the renewable power plant, and/or in order to handle critical issues, e.g. issues which cause the emergency situation. To this end one or more emergency accounts are available, via which trusted users may access the computer system when necessary.

In the method according to the invention, when an emergency situation occurs, a user requests credentials of an emergency account related to the computer system of the renewable power plant from a central access system. The central access system manages the emergency accounts of the renewable power plant, and is thus in the possession of the credentials related to such accounts.

The central access system may be positioned outside the renewable power plant, e.g. remotely with respect to the renewable power plant. Furthermore, the central access system may manage emergency accounts for several computer systems within the renewable power plant and/or for computer systems within several renewable power plants.

Upon receipt of the request, the central access system provides the requested credentials to the user. This could, e.g., be in the form an appropriate username with corresponding password. This may be subject to authentication of the user requesting the credentials for the emergency account, e.g. based on the usual credentials of the user.

Next, the user accesses the computer system of the renewable power plant, using the emergency account and the credentials provided by the central access system. Accordingly, the user is enabled and allowed to access the computer system of the renewable power plant via the emergency account, rather than via the normal user account which the user would apply during normal operation of the renewable power plant. In the case that the emergency situation is of a kind in which remote communication with the computer system of the renewable power plant and/or with an authentication service positioned locally within the renewable power plant is unavailable, it may be necessary that the user is present on site within the renewable power plant in order to access the computer system of the renewable power plant via the emergency account. Thus, the step of the user accessing the computer system of the renewable power plant may be performed from a position within the renewable power plant.

In order to allow the user to access the computer system of the renewable power plant via the emergency account, the computer system should be in the possession of a local record of emergency accounts and associated credentials related to that computer system, thus allowing the computer system to verify the credentials presented by the user without the assistance of an external authentication service. This requires synchronisation between the record held by the central access system and the record held locally by the computer system. This will be described in further detail below.

Thus, the method may further comprise the step of, prior to the user requesting credentials from the central access system, the central access system and the computer system of the renewable power plant sharing credentials of emergency accounts related to the computer system of the renewable power plant.

Once the user has accessed the computer system of the renewable power plant in the manner described above, the user performs actions at the computer system. Such actions could, e.g., include actions which are required in order to ensure continued appropriate operation of the renewable power plant, such as providing or adjusting control parameters, retrieving data related to the operation of the renewable power plant, etc. Alternatively or additionally, the performed actions may include actions related to handling the emergency situation, such as resetting parameters or components, starting or stopping processes, reading and/or modifying configurations, reading logs, and/or any other suitable actions required in order to re-establish services, etc.

Next, the computer system of the renewable power plant communicates to the central access system that the emergency account has been used for accessing the computer system of the renewable power plant. In the case that the communication connection between the computer system of the renewable power plant and the central access system is unavailable or interrupted, as a consequence of the emergency situation, this may await that the communication connection is restored. However, the information that the emergency account has been used is shared among the computer system of the renewable power plant and the central access system, and it can therefore be avoided that the same credentials are provided to another user and/or used for accessing the computer system of the renewable power plant at a later point in time. This improves the security and reliability of the system, because even if the credentials are leaked to a malicious party during the process, the malicious party will not be able to access the computer system of the renewable power plant using the credentials.

Accordingly, the credentials of the emergency account are subsequently refreshed, and the refreshed credentials are shared among the computer system of the renewable power plant and the central access system. Thus, the local record held by the computer system of the renewable power plant and the record held by the central access system are synchronised, and the next time a user requests credentials for that particular emergency account, the central access system will provide the refreshed credentials to the user. Furthermore, the next user will be allowed to access the computer system of the renewable power plant based on the refreshed credentials, because the refreshed credentials are also reflected in the local record held by the computer system of the renewable power plant.

Thus, the method according to the invention ensures that the credentials of the emergency accounts are handled in a secure and trustworthy manner, minimising the risk of valid credentials leaking to malicious or unauthorised parties. Furthermore, it is ensured that the record held locally by the computer system of the renewable power plant and the record held at the central access system are appropriately synchronised with respect to information regarding the emergency access accounts and the credentials associated therewith. This ensures that a user in need of accessing the computer system of the renewable power plant via an emergency account can do this in an easy and smooth manner.

Since the credentials of the emergency account are obtained from the central access system upon request, rather than having the users manage these themselves, it is prevented that the users share the credentials in an unauthorised and/or uncontrolled manner. This also improves the security and trustworthiness of the system.

The step of refreshing the credentials of the emergency account may be performed by the central access system. According to this embodiment, when the central access system has received information from the computer system of the renewable power plant that the emergency account has been used for accessing the computer system of the renewable power plant, the central access system refreshes the credentials of the emergency account, thus updating the record regarding emergency accounts held by the central access system. Subsequently, the central access system shares the refreshed credentials with the computer system of the renewable power plant, thus synchronising the locally held record with the record held by the central access system.

By performing the step of refreshing the credentials of the emergency account at the central access system, it is obtained that the management of the emergency accounts, in particular of the credentials of the emergency accounts, is handled centrally, and thus in a manner which allows a central entity to control the management.

The step of sharing the refreshed credentials among the computer system of the renewable power plant and the central access system may be performed by the computer system of the renewable power plant retrieving the refreshed credentials from the central access system.

According to this embodiment, the refreshed credentials, which were generated by the central access system, are communicated to the computer system of the renewable power plant upon the initiative of the computer system. Thereby it is avoided that external parties are allowed to push communication and/or data into the computer system of the renewable power plant, thus minimising the risk of malicious data reaching the computer system of the renewable power plant. Accordingly, the security of the system is improved.

As an alternative, the communication of the refreshed credentials from the central access system to the computer system of the renewable power plant may be initiated by the central access system. In this case the central access system may be marked as a trusted party at the computer system of the renewable power plant, in order to minimise the risk of malicious parties communicating data to the computer system.

As an alternative to performing the step of refreshing the credentials of the emergency account at the central access system, the step of refreshing the credentials may be performed by the computer system of the renewable power plant. In this case the refreshed credentials are subsequently communicated to the central access system, e.g. essentially in the manner described above. For instance, the central access system may retrieve the refreshed credentials from the computer system of the renewable power plant.

The step of the user requesting credentials of an emergency account may comprise the user providing information to the central access system regarding actions intended to be performed by the user at the computer system of the renewable power plant, and the step of the central access system providing the requested credentials to the user may comprise the central access system providing credentials of an emergency account with access permissions matching the intended actions.

According to this embodiment, the central access system may manage several emergency accounts related to the computer system of the renewable power plant, and the emergency accounts may provide various levels of access privileges with respect to the computer system. When the user requests credentials for an emergency account, he or she simultaneously informs the central access system of the actions which it is intended to perform. The central access system then selects an emergency account with a privilege level which matches the actions which the user needs to perform, or provides the emergency account with such access privileges. Thereby it is ensured that the user is allowed to perform the intended actions, but not more than that, thus preventing that the user is overprivileged. For instance, the selection of the emergency account and/or the privileges associated therewith, may be performed in accordance with a least privilege principle.

For instance, the emergency accounts may be managed in accordance with a role based scheme, in which access privileges are assigned to the emergency accounts according to a number of different roles. In this case the selection of the emergency account may include selecting a role which appropriately matches the actions which the user intends to perform.

The method may further comprise the step of the central access system logging user requests for credentials to emergency accounts. According to this embodiment, the central access system keeps track of which users are requesting emergency access, to which computer systems, and possibly which access permissions or privileges the users are provided with. In order to do this, authentication, or at least identification, of the requesting users at the central access system may be required. This allows the emergency access to the computer system of the renewable power plant to be appropriately audited, e.g. for compliance purposes.

The method may further comprise the step of the computer system of the renewable power plant logging actions performed by users having accessed the computer system using an emergency account. According to this embodiment, the computer system of the renewable power plant keeps track of what the users who have accessed the computer system using an emergency account are actually doing during their access to the computer system. This may also be used for auditing purposes.

The method may further comprise the step of the computer system of the renewable power plant communicating logging data related to actions performed by users having accessed the computer system using an emergency account to the central access system. According to this embodiment, all data related to emergency access to the computer system of the renewable power plant may be accumulated at the central access system. This may, e.g., enable audit of the entire process related to emergency access to the computer system of the renewable power plant.

The method may further comprise the step of the central access system periodically refreshing credentials of all emergency accounts. According to this embodiment, all credentials held by the central access system and by the computer system of the renewable power plant are refreshed periodically, regardless of whether or not the associated emergency accounts have been used for accessing the computer system of the renewable power plant. Thus, if a malicious party has come into the possession of credentials of an emergency account in an unauthorised manner, such credentials will become obsolete, and therefore invalid, after a period of time determined by the periodicity of the refreshing process. This significantly reduces the risk that malicious parties are in the possession of valid credentials enabling such malicious parties to gain unauthorised emergency access to the computer system of the renewable power plant.

The periodic refreshing of the credentials may take place at the central access system or at the computer system of the renewable power plant, and subsequently shared among the central access system and the computer system of the renewable power plant, e.g. essentially in the manner described above.

Thus, the remarks set forth above with regard the refreshing taking place following the use of an emergency account for accessing the computer system of the renewable power plant are equally applicable here.

Alternatively or additionally, the credentials of an emergency account may be refreshed in the case that the credentials have been provided to a user, but have apparently not been used for accessing the computer system of the renewable power plant. For instance, the central access system may refresh the credentials of a given emergency account if the credentials have been provided to a user, and the central access system has not received information from the computer system of the renewable power plant that the emergency account has been used for accessing the computer system within a predefined time window.

If credentials of an emergency account have been provided to a user, and they are not used for accessing the computer system of the renewable power plant shortly thereafter, this introduces a risk of a malicious party coming into the possession of valid credentials. By refreshing the credentials when this occurs, it is ensured that such credentials become obsolete, and thereby invalid, thus reducing the risk of malicious or unauthorised parties gaining access to the computer system of the renewable power plant.

The renewable power plant may be a wind power plant comprising a plurality of wind turbines. Alternatively, the renewable power plant may be a solar power plant comprising a plurality of photovoltaic units, a hybrid power plant comprising a plurality of wind turbines as well as a plurality of photovoltaic units, or any other suitable kind of renewable power plant.

The computer system of the renewable power plant may be a power plant controller (PPC), a wind turbine controller, a photovoltaic unit controller, a SCADA server, a switch, or a router. Alternatively, the computer system may be any other suitable kind of computer system required within a renewable power plant.

### BRIEF DESCRIPTION OF THE DRAWINGS

The invention will now be described in further detail with reference to the accompanying drawings in which
Fig. 1 is a schematic diagram illustrating a system for performing a method according to an embodiment of the invention, and
Fig. 2 is a flow chart illustrating a method according to an embodiment of the invention.

### DETAILED DESCRIPTION OF THE DRAWINGS

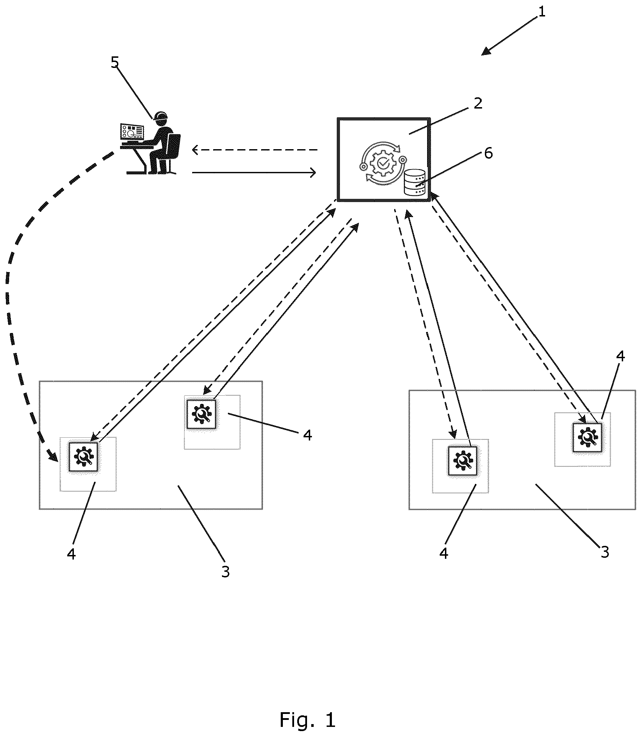

Fig. 1 is a schematic diagram illustrating a system 1 for performing a method according to an embodiment of the invention. The system comprises a central access system 2 configured to communicate with a number of renewable power plants 3, two of which are shown. The renewable power plants 3 could, e.g., be in the form of wind power plants, solar power plants or hybrid power plants.

More particularly, the central access system 2 communicates with computer systems 4 arranged within the renewable power plants 3. The computer systems 4 could, e.g., be in the form of power plant controllers (PPCs), controllers of the individual renewable power producers, such as wind turbines or photovoltaic units, SCADA servers, switches, routers, etc.

During normal operation of the renewable power plant 3, a user 5 may access relevant computer systems 4 of the renewable power plant 3 via a usual user account and credentials associated therewith. However, in the case that an emergency occurs, which prevents that the usual authentication process is performed, this is not possible. If the user 5 needs to access a computer system 4 of a renewable power plant 3 under such circumstances, it is necessary to use an emergency account.

Thus, in this case the user 5 contacts the central access system 2 and requests credentials for an emergency account related to the computer system 4 of the renewable power plant 3 which the user 5 wishes to access. The central access system 2 holds a record 6 of emergency accounts and their associated credentials for the computer systems 4 of the renewable power plants 3 which the central access system 2 is in charge of managing.

Thus, upon the request of the user 5, and possibly subject to appropriate authentication of the user 5, the central access system 2 provides the requested credentials to the user 5.

Once in the possession of the credentials of the emergency account, the user 5 accesses the relevant computer system 4 of the renewable power plant 3, using the emergency account and the credentials received from the central access system 2. The computer system 4 of the renewable power plant 3 holds a local record of emergency accounts and the credentials associated therewith being related to that computer system 4. This local record has been synchronised with the record 6 held by the central access system 2. Accordingly, the computer system 4 is capable of verifying the credentials presented by the user 5, and thereby of granting or denying the user 5 access to the computer system 4 based thereon, without having to contact an external authentication service or the central access system 2.

When the user 5 has accessed the computer system 4 of the renewable power plant 3 as described above, he or she performs required actions at the computer system 4.

After the computer system 4 of the renewable power plant 3 has registered that a given emergency account has been used for accessing the computer system 4, the computer system 4 communicates this to the central access system 2. Thus, the computer system 4 of the renewable power plant 3 as well as the central access system 2 now 'knows' that a given emergency account has been used for accessing the computer system 4. In the case that the communication connection between the computer system 4 and the central access system 2 is unavailable or interrupted, as a consequence of the emergency occurring, the communication of this information may be deferred until the communication connection has been restored or made available again.

Next, the credentials of the emergency account are refreshed, and the refreshed credentials are shared among the computer system 4 of the renewable power plant 3 and the central access system 2. Thus, the local record held by the computer system 4 of the renewable power plant 3 and the record 6 held by the central access system 2 are synchronised, in the sense that they are both updated with the refreshed credentials.

The refreshing of the credentials may advantageously be performed by the central access service 2, and the refreshed credentials may subsequently be retrieved from the central access service 2 by the computer system 4 of the renewable power plant 3.

Thus, the risk of malicious parties coming into the possession of valid credentials of emergency accounts related to the computer systems 4 of the renewable power plants 3 is minimised. However, users 5 having a legitimate interest in accessing a given computer system 4 of a given renewable power plant 3 can do so in an easy and smooth manner.

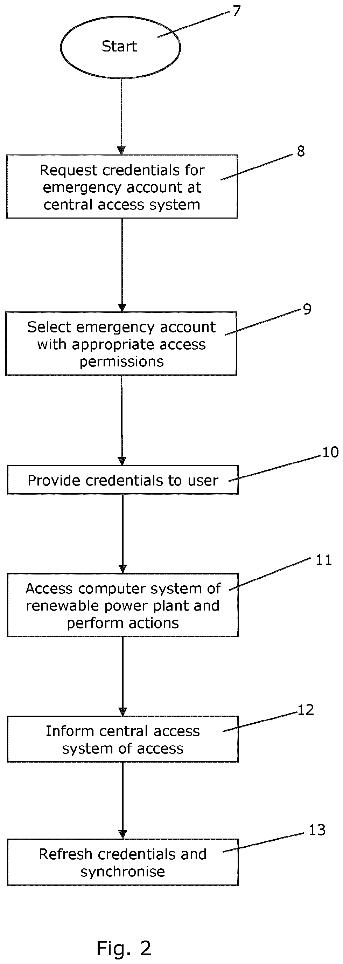

Fig. 2 is a flow chart illustrating a method according to an embodiment of the invention. The process is initiated at step 7. At step 8 it has been established that a user is in the need for accessing a computer system of a renewable power plant via an emergency account. Thus, the user contacts a central access system and requests credentials for an emergency account related to the computer system which the user wishes to access. This may include an authentication process in which the user is identified and authorised, e.g. by the user presenting credentials of a usual user account of the user. Furthermore, the user may provide information to the central access system regarding actions which the user intends to perform at the computer system.

At step 9, the central access system selects an emergency account with appropriate access permissions with regard to the computer system of the renewable power plant. For instance, the access permissions may match the actions which the user intends to perform at the computer system. Alternatively or additionally, the access permissions may reflect a usual access permission level of the user.

At step 10, the central access system provides the credentials of the selected emergency account to the user, and at step 11, the user accesses the computer system of the renewable power plant using the emergency account and the credentials received from the central access system. This includes the computer system verifying the credentials presented by the user by means of a record held locally at the computer system, and which has been synchronised with a record held at the central access system. Furthermore, the user performs the planned actions at the computer system, and possibly any further actions which may be required in order to ensure appropriate continued operation of the renewable power plant and/or handling of issues causing or underlying the emergency situation.

At step 12, the computer system of the renewable power plant informs the central access system that the emergency account has been used for accessing the computer system of the renewable power plant. Thus, the computer system of the renewable power plant as well as the central access system is now aware that the emergency account and the credentials associated therewith have been used, and that they should preferably not be provided to another user. In the case that the communication connection between the computer system of the renewable power plant and the central access system is unavailable or disrupted as a consequence of the emergency situation, the step of communicating this information may be deferred until the communication connection is available again.

At step 13, the credentials of the emergency account are refreshed, and the refreshed credentials are shared among the computer system of the renewable power plant and the central access system, thus synchronising the local record held by the computer system of the renewable power plant and the record held by the central access system. This may, e.g., be performed by the central access system refreshing the credentials and the computer system of the renewable power plant subsequently retrieving the refreshed credentials from the central access system.

## Claims

1. A method for managing emergency access to a computer system (4) of a renewable power plant (3), the method comprising the steps of:
- a user (5) requesting credentials of an emergency account related to the computer system (4) of the renewable power plant (3) from a central access system (2),
- the central access (2) system providing the requested credentials to the user (5),
- the user (5) accessing the computer system (4) of the renewable power plant (3), using the emergency account and the credentials provided by the central access system (2), and the user (5) performing actions at the computer system (4) of the renewable power plant (3),
- the computer system (4) of the renewable power plant (3) communicating to the central access system (2) that the emergency account has been used for accessing the computer system (4) of the renewable power plant (3),
- refreshing the credentials of the emergency account, and
- sharing the refreshed credentials among the computer system (4) of the renewable power plant (3) and the central access system (2).

2. A method according to claim 1, wherein the step of refreshing the credentials of the emergency account is performed by the central access system (2).

3. A method according to claim 2, wherein the step of sharing the refreshed credentials among the computer system (4) of the renewable power plant (3) and the central access system (2) is performed by the computer system (4) of the renewable power plant (3) retrieving the refreshed credentials from the central access system (2).

4. A method according to any of the preceding claims, wherein the step of the user (5) requesting credentials of an emergency account comprises the user (5) providing information to the central access system (2) regarding actions intended to be performed by the user (5) at the computer system (4) of the renewable power plant (3), and wherein the step of the central access system (2) providing the requested credentials to the user (5) comprises the central access system (2) providing credentials of an emergency account with access permissions matching the intended actions.

5. A method according to any of the preceding claims, further comprising the step of the central access system (2) logging user requests for credentials to emergency accounts.

6. A method according to any of the preceding claims, further comprising the step of the computer system (4) of the renewable power (3) plant logging actions performed by users (5) having accessed the computer system (4) using an emergency account.

7. A method according to claim 6, further comprising the step of the computer system (4) of the renewable power plant (3) communicating logging data related to actions performed by users (5) having accessed the computer system (4) using an emergency account to the central access system (2).

8. A method according to any of the preceding claims, further comprising the step of the central access system (2) periodically refreshing credentials of all emergency accounts.

9. A method according to any of the preceding claims, wherein the renewable power plant (3) is a wind power plant comprising a plurality of wind turbines.

10. A method according to any of the preceding claims, wherein the computer system (4) of the renewable power plant (3) is a power plant controller (PPC), a wind turbine controller, a photovoltaic unit controller, a SCADA server, a switch, or a router.
